# FASCICULE DE BREVET EUROPEEN

(11) **EP 3 113 945 B1**
(45) Date de publication et mention de la délivrance du brevet: **16.08.2023**
(21) Numéro de dépôt: 15714578.0
(22) Date de dépôt: 06.03.2015
(51) Int. Cl.: B32B 5/02, B32B 13/12

(54) **PLAQUE ACOUSTIQUE A BASE DE PLATRE.**
AKUSTIKPLATTE AUS GIPS
ACOUSTIC PANEL MADE OF PLASTER

(30) Priorité: 07.03.2014 FR 1451884
(43) Date de publication de la demande: 11.01.2017
(73) Titulaire: SAINT-GOBAIN PLACO, 92400 Courbevoie (FR)
(72) Inventeur: CHUDA, Katarzyna, F-92600 Asnieres sur Seine (FR); DEMATHIEU-ROELTGEN, Caroline, F-77100 Meaux (FR); CHOPIN, Véronique, F-95820 Bruyeres Sur Oise (FR); RIDDLE, Carl, Loughborough Leicestershire LE12 6JS (GB); SIMONS, Jeremy, Loughborough Leicestershire LE12 6JS (GB)
(74) Mandataire: Saint-Gobain Recherche
(86) Numéro de dépôt international: PCT/FR2015/050550
(87) Numéro de publication internationale: WO 2015/132536

(56) Documents cités:
- EP-A1- 1 110 978
- WO-A1-2004/083307
- US-A- 4 239 676
- US-A- 6 162 839
- US-A1- 2006 265 999
- US-A1- 2014 175 320
- US-B2- 6 699 339

## Description

L'invention se rapporte à une plaque à base de plâtre dotée de propriétés acoustiques. Une telle plaque peut être utilisée notamment pour la réalisation d'un parement mural, de plafond ou de plancher, et d'une cloison de séparation.

Les plaques à base de plâtre sont généralement des plaques composites comprenant une âme en plâtre disposée entre deux couches de papier ou de non-tissé constitué de fibres de verre ou d'un polymère. Ces plaques possèdent des propriétés mécaniques qui répondent aux normes en vigueur, en particulier une bonne résistance à la flexion sous charge.

Les plaques à base de plâtre en tant que telles ne présentent pas de performances acoustiques particulières. Lorsqu'on souhaite améliorer ces performances, il est connu d'associer à ladite plaque un matériau isolant phonique tel qu'une laine de verre ou de roche ou un polymère, pour former un produit composite qui peut être maintenu en place au moyen de profilés, d'une colle, de vis ou de chevilles selon l'usage visé.

Les plaques à base de plâtre les plus usuelles ont une épaisseur moyenne de 12,5 mm et sont commercialisées généralement sous la dénomination « BA 13 ». Ces plaques présentent une masse surfacique de l'ordre de 9 kg/m². Il est certes bien connu que l'on peut améliorer les performances acoustiques d'une plaque en augmentant sa masse surfacique, par exemple jusqu'à 12 kg/m², sans modifier son épaisseur, mais cela se traduit nécessairement par une augmentation de la quantité de plâtre dans la plaque.

De ce fait, le coût de la plaque est plus élevé.

La pose d'une plaque de masse surfacique plus élevée présente aussi des inconvénients : à cause de l'augmentation du poids, la manipulation de la plaque est plus difficile et celle-ci étant plus dense il est plus difficile de la fixer à l'aide de vis. Ces inconvénients deviennent majeurs quand la plaque doit être fixée en hauteur (cloison ou plafond).

La présente invention a pour but de fournir une plaque à base de plâtre qui présente des propriétés acoustiques améliorées, tout en conservant de bonnes propriétés mécaniques.

Notamment, on cherche à obtenir une plaque à base de plâtre dont les propriétés acoustiques sont au moins équivalentes à celles d'une plaque classique de même épaisseur mais de masse surfacique plus élevée, de l'ordre de 12 kg/m². La masse surfacique plus particulièrement visée par l'invention varie de 4 à 11 kg/m², de préférence de l'ordre de 9 kg/m².

Ce but est atteint selon l'invention grâce à la plaque à base de plâtre, notamment du type comprenant une âme à base de plâtre disposée entre deux feuilles de de papier ou de non-tissé, caractérisée en ce que ladite âme renferme au moins un polymère.

Plus précisément, l'âme de la plaque comprend du plâtre et au moins un polymère choisi parmi le polybutyral de vinyle (PVB), les copolymères d'acétate de vinyle et d'une oléfine, lesquels copolymères présentent une température de transition vitreuse qui varie de -10 à +25°C, les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique.

Le polybutyral de vinyle conforme à l'invention présente avantageusement une température de transition vitreuse qui varie de 40 à 100°C, de préférence 50 à 90°C et mieux encore 60 et 80°C, mesurée par analyse calorimétrique différentielle selon la norme ISO 11357-1 :2009.

Le polybutyral de vinyle préféré se présente sous la forme d'une poudre constituée de particules ayant une taille comprise entre 20 et 1000 µm, notamment 50 à 100 µm, 150 à 400 µm ou 400 à 1000 µm.

Les copolymères d'acétate de vinyle et d'une oléfine conformes à l'invention sont par exemple des copolymères d'acétate de vinyle et d'au moins un monomère choisi parmi l'éthylène, le propylène, le butylène et l'isobutylène. La température de transition vitreuse de ces copolymères varie de préférence de -5 à +20°C et avantageusement de 0 à +10°C. La température de transition vitreuse des copolymères est mesurée par analyse calorimétrique différentielle selon la norme ISO 11357-1:2009. Les copolymères d'acétate de vinyle et d'éthylène (EVA) sont préférés.

Les terpolymères d'acétate de vinyle, d'une oléfine et d'un monomère d'ester vinylique sont par exemple des terpolymères d'acétate de vinyle, d'une oléfine telle que définie au paragraphe précédent et d'acrylate ou de méthacrylate d'alkyle.

Les terpolymères d'acétate de vinyle, d'un monomère d'ester vinylique et d'un monomère (méth)acrylate sont par exemple des terpolymères d'acétate de vinyle, d'ester vinylique d'acide versatique (dénommé VeoVa10) et d'acrylate.

Les copolymères d'acétate de vinyle et d'un monomère acrylique sont par exemple des copolymères d'acétate de vinyle et d'acrylate ou de méthacrylate d'alkyle.

Le polymère représente en général 1 à 40 % en poids du mélange constitué par le plâtre et le polymère, de préférence 3 à 30 % et avantageusement 5 à 20 %.

Le polymère conforme à l'invention se présente avantageusement sous la forme de particules ayant une dimension moyenne qui varie de 0,01 à 1200 µm, de préférence 0,1 à 1000 µm, et mieux encore de 0,2 à 400 µm.

L'âme de la plaque selon l'invention peut contenir en outre des additifs qui améliorent les propriétés physico-chimiques du produit final et permettent d'obtenir de bonnes conditions d'application. L'âme peut ainsi comprendre les additifs suivants dans les proportions pondérales suivantes, exprimées en parts pour 100 parts en poids de plâtre :
- 0,1 à 15 parts d'un agent d'adhésion dont la fonction est d'augmenter l'adhésion du revêtement en papier avec le plâtre, par exemple un amidon, notamment préalablement traité avec un acide, une dextrine ou une farine végétale, notamment de blé ou de maïs,
- 0,001 à 10 parts d'un accélérateur de prise, par exemple le sulfate de calcium hydraté ou le sulfate de potassium,
- 0,001 à 10 parts d'un retardateur de prise,
- 0 à 10 parts d'un biocide, par exemple le sodium omadine,
- 0,0001 à 1 part d'un agent moussant qui a pour rôle de créer des pores afin de diminuer la densité du produit final. A titre d'exemple, on peut citer les alkyléthers sulfate de sodium et le laurylsulfate de sodium,
- 0 à 10 parts d'au moins un agent hydrofugeant, par exemple un siloxane ou un polysiloxane,
- 0 à 20 parts d'au moins un agent anti-feu, par exemple la vermiculite, la silice, notamment de dimension micrométrique, une argile ou des fibres métalliques,
- 0 à 20 parts d'au moins un agent de renforcement, par exemple des fibres de polymère, des fibres minérales, notamment en verre, et des fibres animales ou végétales.

Un autre objet de l'invention concerne un procédé de fabrication de la plaque à base de plâtre, notamment du type comportant une âme disposée entre deux couches de papier ou de non-tissé qui vient d'être décrite.

Le procédé est caractérisé en ce que, pour réaliser l'âme de la plaque, au moins un polymère choisi parmi le polybutyral de vinyle (PVB), les copolymères d'acétate de vinyle et d'une oléfine, lesquels copolymères présentent une température de transition vitreuse qui varie de -10 à +25°C, les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique est ajouté à du gypse calciné.

La fabrication des plaques à base de plâtre est connue en soi. La plaque de plâtre est formée selon un procédé en continu qui consiste à mélanger du gypse calciné en poudre (hémihydrate de sulfate de calcium) avec de l'eau pour former une pâte qui est déposée en continu entre deux feuilles de papier ou de non-tissé contenant des fibres minérales, notamment de verre, ou des fibres de polymère.

Le produit formé est pressé pour obtenir l'épaisseur désirée, puis il est transporté en continu sur un convoyeur sur une distance permettant à la pâte d'atteindre un niveau de durcissement suffisant pour pouvoir être découpé en plaques de longueur déterminée. Les plaques sont ensuite séchées dans une étuve afin d'éliminer l'excès d'eau.

Classiquement, l'hémihydrate de sulfate de calcium (CaSO₄.0,5 H₂O ; gypse calciné), qu'il soit naturel ou synthétique c'est-à-dire issu notamment de la désulfuration des gaz de centrales thermiques, subit une réaction d'hydratation en présence d'eau et se transforme en dihydrate de sulfate de calcium (CaSO₄.2 H₂O : gypse).

La quantité de gypse calciné mis en oeuvre pour former la pâte varie généralement de 50 à 150 parts en poids pour 100 parts en poids d'eau et de préférence de 60 à 120 parts.

Le polymère peut se présenter sous la forme d'une solution ou d'une dispersion aqueuse, d'une poudre ou de pastilles. Dans le cas d'une solution ou d'une dispersion, celle-ci est ajoutée à l'eau servant à préparer la pâte. Lorsqu'il s'agit d'une poudre ou de pastilles, l'ajout se fait avec le gypse calciné avant qu'il soit mélangé avec l'eau pour former la pâte. Les dispersions et les poudres sont préférées.

Bien que l'épaisseur de la plaque à base de plâtre plus particulièrement visée soit égale à 12,5 mm, on ne saurait exclure une épaisseur inférieure, notamment jusqu'à 6 millimètres, ou supérieure, notamment jusqu'à 25 millimètres.

La plaque à base de plâtre conforme à l'invention peut être utilisée telle quelle ou en association avec un autre matériau, par exemple une laine minérale ou de bois, ou un polymère pour former un panneau acoustique et/ou thermique, ou encore un film polymère intercalaire assurant la liaison entre deux plaques à base de plâtre pour former panneau composite.

Cette plaque peut être utilisée pour former des parements muraux, des faux-plafonds, des planchers et des cloisons de séparation.

Un autre objet de l'invention concerne l'utilisation d'un polymère choisi parmi le polybutyral de vinyle (PVB), les copolymères d'acétate de vinyle et d'une oléfine, lesquels copolymères présentent une température de transition vitreuse qui varie de -10 à +25°C, les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique dans une composition à base de gypse calciné destinée à la fabrication d'une plaque à base de plâtre pour améliorer les performances acoustiques de ladite plaque.

La composition adaptée à la fabrication de la plaque à base de plâtre décrite précédemment constitue aussi un objet de la présente invention. Cette composition à base de plâtre comprend du gypse calciné et au moins un polymère choisi parmi le polybutyral de vinyle (PVB), les copolymères d'acétate de vinyle et d'une oléfine, lesquels copolymères présentent une température de transition vitreuse qui varie de -10 à +25°C, les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique. La composition peut être utilisée notamment pour la réalisation de joints.

Les exemples qui suivent permettent d'illustrer l'invention sans toutefois la limiter.

### EXEMPLES 1 A 15

On prépare des plaques à base de plâtre à partir des compositions données dans le tableau 1.

Dans un mélangeur, on introduit de l'hémihydrate de sulfate de calcium, le polymère et l'eau.

Le mélange est agité pendant 15 secondes à 600 tours/minute et 45 secondes à 1850 tours/minute. On ajoute ensuite l'agent moussant et on soumet le mélange à une agitation à 250 tours/minute pendant 50 secondes afin d'obtenir une pâte.

La pâte est versée dans un moule en laiton comportant 4 cavités parallélépipédiques (longueur : 300 mm ; largeur : 30 mm ; profondeur : 13 mm) dont les parois internes ont été préalablement revêtues d'une couche d'huile. Les échantillons sont démoulés après 20 minutes, puis laissés à l'air libre pendant 40 minutes et enfin séchés dans une étuve à 40°C jusqu'à ce que leur poids reste constant.

A titre de comparaison, on a préparé dans les mêmes conditions deux plaques ne contenant pas de polymère ayant une masse surfacique égale à 9,0 et 11,9 kg/m² (exemples comparatifs 10 et 11) et quatre plaques contenant un polymère non compris dans l'invention (exemples comparatifs 12 à 15).

Les performances acoustiques des plaques sont évaluées en mesurant leur impédance mécanique MIM (« Measurement of Mechanical impédance ») dans les conditions de la norme ISO 16940 :2008(E). A partir de la courbe de la fréquence d'accélération (dB) en fonction de la fréquence (Hz), on calcule le module d'Young dynamique (en GN/m²) et le facteur de perte (en %).

Les échantillons sont des barrettes de 300 mm de longueur, 30 mm de largeur et 13 mm d'épaisseur.

Dans le tableau 1 figurent les valeurs du module d'Young, du facteur de perte et du gain acoustique calculé par rapport aux plaques de référence des exemples comparatifs 10 et 11.

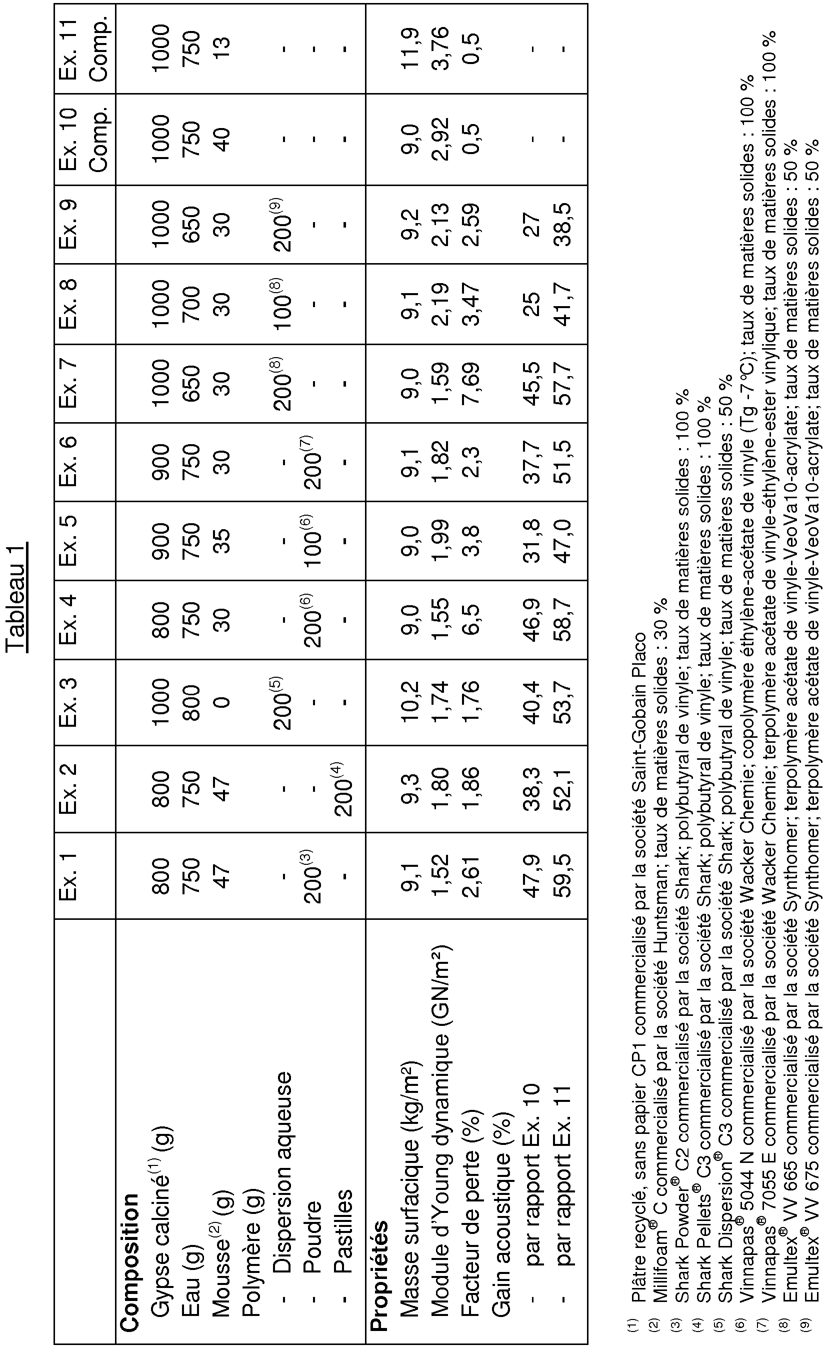

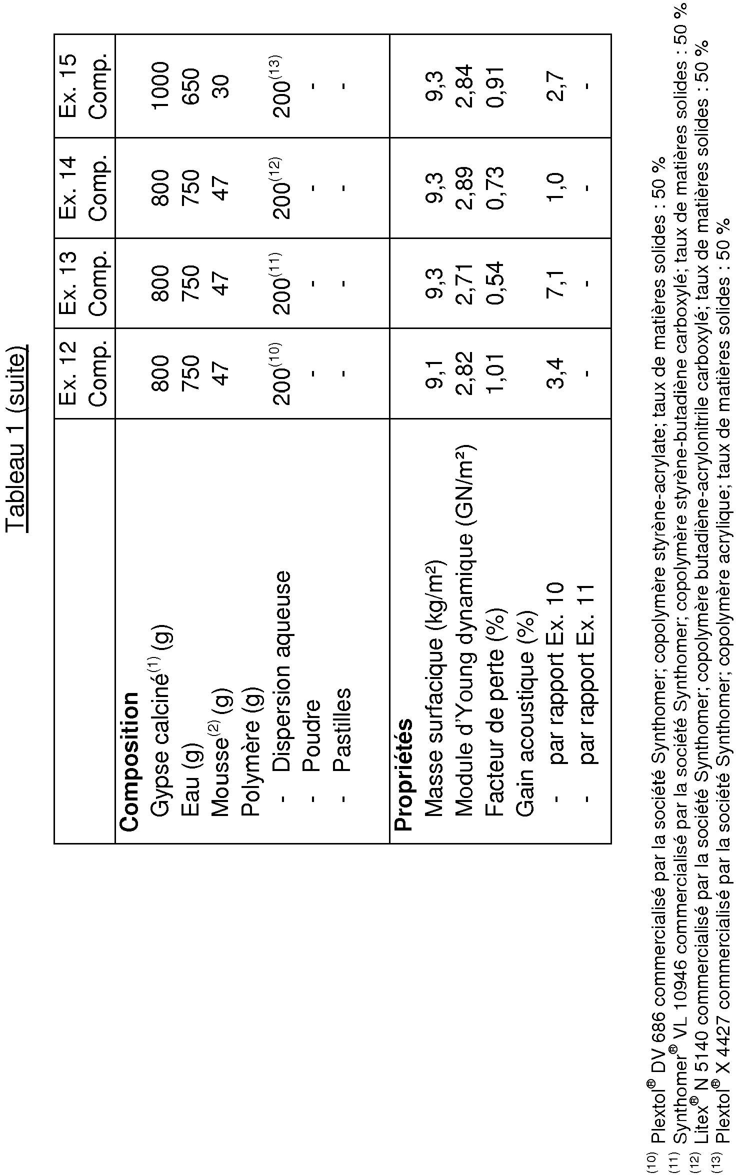

## Revendications

1. Plaque à base de plâtre, notamment du type comprenant une âme à base de plâtre disposée entre deux feuilles de papier ou de non-tissé, **caractérisée en ce que** ladite âme renferme au moins un polymère choisi parmi le polybutyral de vinyle (PVB), les copolymères d'acétate de vinyle et d'une oléfine, lesquels copolymères présentent une température de transition vitreuse qui varie de -10 à +25°C, (mesurée selon la norme ISO 11357-1:2009) les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique.

2. Plaque selon la revendication 1, **caractérisée en ce que** les copolymères d'acétate de vinyle et d'une oléfine présentent une température de transition vitreuse qui varie de -5 à +20°C, de préférence de 0 à +10°C.

3. Plaque selon la revendication 1 ou 2, **caractérisée en ce que** le polymère représente 1 à 40 % en poids du mélange constitué par le plâtre et le polymère, de préférence 3 à 30 %, avantageusement 5 à 20 %.

4. Plaque selon l'une des revendications 1 à 3, **caractérisée en ce que** le polymère se présente sous la forme de particules ayant une dimension moyenne qui varie de 0,01 à 1200 µm, de préférence de 0,1 à 1000 µm, et mieux encore de 0,2 à 400 µm.

5. Plaque selon l'une des revendications 1 à 4, **caractérisée en ce qu'**elle comprend en outre les additifs suivants dans les proportions pondérales suivantes, exprimées pour 100 parts en poids de plâtre :
- 0,1 à 15 parts d'un agent d'adhésion, par exemple un amidon, notamment préalablement traité avec un acide, une dextrine ou une farine végétale,
- 0,001 à 10 parts d'un accélérateur de prise, par exemple le sulfate de calcium hydraté ou le sulfate de potassium,
- 0,001 à 10 parts d'un retardateur de prise,
- 0 à 10 parts d'un biocide, par exemple le sodium omadine,
- 0,0001 à 1 part d'un agent moussant, par exemple les alkyléthers sulfate de sodium et le laurylsulfate de sodium,
- 0 à 10 parts d'au moins un agent hydrofugeant, par exemple un siloxane ou un polysiloxane,
- 0 à 20 parts d'au moins un agent anti-feu, par exemple la vermiculite, la silice, une argile ou des fibres métalliques,
- 0 à 20 parts d'au moins un agent de renforcement, par exemple des fibres de polymère, des fibres minérales ou des fibres animales ou végétales.

6. Procédé de fabrication d'une plaque, notamment du type comportant une âme disposée entre deux feuilles de papier ou de non-tissé, dans lequel on mélange du gypse calciné en poudre avec de l'eau pour former une pâte, on dépose la pâte en continu entre lesdites feuilles, on presse le produit formé pour obtenir l'épaisseur désirée, on découpe les plaques à la longueur désirée, **caractérisé en ce que** pour réaliser l'âme de la plaque on ajoute au gypse calciné au moins un polymère choisi parmi le polybutyral de vinyle (PVB), les copolymères d'acétate de vinyle et d'une oléfine, lesquels copolymères présentent une température de transition vitreuse qui varie de -10 à +25°C, (mesurée selon la norme ISO 11357-1:2009) les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique.

7. Utilisation d'un polymère choisi parmi le polybutyral de vinyle (PVB), les copolymères d'acétate de vinyle et d'une oléfine, lesquels copolymères présentent une température de transition vitreuse qui varie de -10 à +25°C, (mesurée selon la norme ISO 11357-1:2009) les terpolymères d'acétate de vinyle, d'une oléfine et d'un monomère d'ester vinylique, les terpolymères d'acétate de vinyle, d'un monomère d'ester vinylique et d'un monomère (méth)acrylate, et les copolymères d'acétate de vinyle et d'un monomère acrylique dans une composition à base de gypse calciné destinée à la fabrication d'une plaque à base de plâtre pour améliorer les performances acoustiques de ladite plaque.

## Patentansprüche

1. Platte auf Gipsbasis, insbesondere von der Art, die einen Kern auf Gipsbasis umfasst, der zwischen zwei Papier- oder Vliesbögen angeordnet ist, **dadurch gekennzeichnet, dass** der Kern mindestens ein Polymer einschließt, das aus Polyvinylbutyral (PVB), Copolymeren von Vinylacetat und einem Olefin, wobei die Copolymere eine Glasübergangstemperatur aufweisen, die von -10 bis +25 °C variiert (gemessen gemäß der ISO-Norm 11357-1:2009), Terpolymeren von Vinylacetat, einem Olefin und einem Vinylestermonomer, Terpolymeren von Vinylacetat, einem Vinylestermonomer und einem (Meth)acrylatmonomer, und Copolymeren von Vinylacetat und einem Acrylmonomer ausgewählt ist.

2. Platte nach Anspruch 1, **dadurch gekennzeichnet, dass** die Copolymere von Vinylacetat und einem Olefin eine Glasübergangstemperatur aufweisen, die von -5 bis +20 °C, vorzugsweise von 0 bis +10 °C, variiert.

3. Platte nach Anspruch 1 oder 2, **dadurch gekennzeichnet, dass** das Polymer zu 1 bis 40 Gew.-% die Mischung darstellt, die aus dem Gips und dem Polymer besteht, vorzugsweise 3 bis 30 %, vorteilhafterweise 5 bis 20 %.

4. Platte nach einem der Ansprüche 1 bis 3, **dadurch gekennzeichnet, dass** das Polymer in Form von Partikeln vorliegt, die eine durchschnittliche Abmessung vorweisen, die zwischen 0,01 und 1200 µm, vorzugsweise zwischen 0,1 und 1000 µm und besser zwischen 0,2 und 400 µm variiert.

5. Platte nach einem der Ansprüche 1 bis 4, **dadurch gekennzeichnet, dass** sie außerdem folgende Zusatzstoffe in folgenden Gewichtsanteilen, ausgedrückt pro 100 Gewichtsteile Gips, umfasst:
- 0,1 bis 15 Teile eines Haftvermittlers, beispielsweise eine Stärke, insbesondere vorbehandelt mit einer Säure, einem Dextrin oder einem Pflanzenmehl,
- 0,001 bis 10 Teile eines Abbindebeschleunigers, beispielsweise hydratisiertes Calciumsulfat oder Kaliumsulfat,
- 0,001 bis 10 Teile eines Abbindeverzögerers,
- 0 bis 10 Teile eines Biozids, beispielsweise Natriumomadin,
- 0,0001 bis 1 Teil eines Treibmittels, beispielsweise Natriumalkylethersulfat und Natriumlaurylsulfat,
- 0 bis 10 Teile mindestens eines Hydrophobierungsmittels, beispielsweise ein Siloxan oder ein Polysiloxan,
- 0 bis 20 Teile mindestens eines Brandschutzmittels, beispielsweise Vermiculit, Kieselerde, Ton oder Metallfasern,
- 0 bis 20 Teile mindestens eines Verstärkungsmittels, beispielsweise Polymerfasern, Mineralfasern oder tierische oder pflanzliche Fasern.

6. Verfahren zum Herstellen einer Platte, insbesondere von der Art, die einen Kern enthält, der zwischen zwei Papier- oder Vliesbögen angeordnet ist, wobei pulverisierter kalzinierter Gips mit Wasser gemischt wird, um eine Paste zu bilden, die Paste zwischen den Bögen abgeschieden wird, das gebildete Produkt gepresst wird, um die gewünschte Dicke zu erhalten, die Platten auf die gewünschte Länge geschnitten werden, **dadurch gekennzeichnet, dass** zum Fertigen des Kerns der Platte dem kalzinierten Gips mindestens ein Polymer zugesetzt wird, das aus Polyvinylbutyral (PVB), Copolymeren von Vinylacetat und einem Olefin, wobei die Copolymere eine Glasübergangstemperatur aufweisen, die von -10 bis +25 °C variiert (gemessen gemäß der ISO-Norm 11357-1:2009), Terpolymeren von Vinylacetat, einem Olefin und einem Vinylestermonomer, Terpolymeren von Vinylacetat, einem Vinylestermonomer und einem (Meth)acrylatmonomer, und Copolymeren von Vinylacetat und einem Acrylmonomer ausgewählt ist.

7. Verwendung eines Polymers, ausgewählt aus Polyvinylbutyral (PVB), Copolymeren von Vinylacetat und einem Olefin, wobei die Copolymere eine Glasübergangstemperatur aufweisen, die von -10 bis +25 °C variiert (gemessen gemäß ISO-Norm 11357-1:2009), Terpolymeren von Vinylacetat, einem Olefin und einem Vinylestermonomer, Terpolymeren von Vinylacetat, einem Vinylestermonomer und einem (Meth)acrylatmonomer und Copolymeren von Vinylacetat und einem Acrylmonomer in einer Zusammensetzung auf der Basis von kalziniertem Gips, die für die Herstellung einer Platte auf Gipsbasis zum Verbessern der akustischen Leistungen dieser Platte bestimmt ist.

## Claims

1. A plaster-based board, in particular of the type comprising a plaster-based core positioned between two sheets of paper or nonwoven fabric, **characterized in that** said core contains at least one polymer selected from polyvinyl butyral (PVB), copolymers of vinyl acetate and an olefin, which copolymers have a glass transition temperature that varies from -10°C to +25°C, measured according to the ISO 11357-1:2009 standard, terpolymers of vinyl acetate, an olefin and a vinyl ester monomer, terpolymers of vinyl acetate, a vinyl ester monomer and a (meth)acrylate monomer, and copolymers of vinyl acetate and an acrylic monomer.

2. The board as claimed in claim 1, **characterized in that** the copolymers of vinyl acetate and an olefin have a glass transition temperature that varies from -5°C to +20°C, preferably from 0°C to +10°C.

3. The board as claimed in claim 1 or 2, **characterized in that** the polymer represents 1% to 40% by weight of the mixture constituted by the plaster and the polymer, preferably 3% to 30%, advantageously 5% to 20%.

4. The board as claimed in one of claims 1 to 3, **characterized in that** the polymer is in the form of particles having a mean dimension which varies from 0.01 to 1200 µm, preferably from 0.1 to 1000 µm, and better still from 0.2 to 400 µm.

5. The board as claimed in one of claims 1 to 4, **characterized in that** it additionally comprises the following additives in the following weight proportions, expressed per 100 parts by weight of plaster:
- 0.1 to 15 parts of an adhesion agent, for example a starch, in particular pretreated with an acid, a dextrin or a vegetable flour,
- 0.001 to 10 parts of a setting accelerator, for example hydrated calcium sulfate or potassium sulfate,
- 0.001 to 10 parts of a setting retarder,
- 0 to 10 parts of a biocide, for example sodium omadine,
- 0.0001 to 1 part of a foaming agent, for example sodium sulfate alkyl ethers and sodium lauryl sulfate,
- 0 to 10 parts of at least one water repellent, for example a siloxane or a polysiloxane,
- 0 to 20 parts of at least one fire retardant, for example vermiculite, silica, a clay or metal fibers,
- 0 to 20 parts of at least one reinforcer, for example polymer fibers, mineral fibers or animal or vegetable fibers.

6. A process for manufacturing a board, in particular of the type comprising a core positioned between two sheets of paper or nonwoven fabric, wherein powdered calcined gypsum is mixed with water in order to form a paste, the paste is deposited continuously between said sheets, the product formed is pressed in order to obtain the desired thickness, the boards are cut to the desired length, **characterized in that,** in order to produce the core of the board, at least one polymer selected from polyvinyl butyral (PVB), copolymers of vinyl acetate and an olefin, which copolymers have a glass transition temperature that varies from -10°C to +25°C, measured according to the ISO 11357-1:2009 standard, terpolymers of vinyl acetate, an olefin and a vinyl ester monomer, terpolymers of vinyl acetate, a vinyl ester monomer and a (meth)acrylate monomer, and copolymers of vinyl acetate and an acrylic monomer is added to the calcined gypsum.

7. The use of a polymer selected from polyvinyl butyral (PVB), copolymers of vinyl acetate and an olefin, which copolymers have a glass transition temperature that varies from -10°C to +25°C, measured according to the ISO 11357-1:2009 standard, terpolymers of vinyl acetate, an olefin and a vinyl ester monomer, terpolymers of vinyl acetate, a vinyl ester monomer and a (meth)acrylate monomer, and copolymers of vinyl acetate and an acrylic monomer in a composition based on calcined gypsum intended for the manufacture of a plaster-based board in order to improve the acoustic performance of said board.
